(19) Europäisches Patentamt / European Patent Office / Office européen des brevets

(11) **EP 4 435 420 B1**

(12) **EUROPEAN PATENT SPECIFICATION**

(45) Date of publication and mention of the grant of the patent:
**24.09.2025 Bulletin 2025/39**

(21) Application number: **23315055.6**

(22) Date of filing: **20.03.2023**

(51) International Patent Classification (IPC):
**G01N 23/083** (2018.01)   **G01N 29/11** (2006.01)

(52) Cooperative Patent Classification (CPC):
**G01N 23/083; G01N 29/11;** G01N 2291/0237

(54) **METHOD AND APPARATUS FOR DIRECT CHARACTERIZATION OF FILMS HAVING POROSITY, AND MANUFACTURING METHOD OF SUCH A FILM**

VERFAHREN UND VORRICHTUNG ZUR DIREKTEN CHARAKTERISIERUNG VON FOLIEN MIT POROSITÄT UND HERSTELLUNGSVERFAHREN FÜR SOLCH EINE FOLIE

PROCÉDÉ ET APPAREIL DE CARACTÉRISATION DIRECTE DE FILMS PRÉSENTANT UNE POROSITÉ, ET PROCÉDÉ DE FABRICATION D'UN TEL FILM

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.09.2024 Bulletin 2024/39**

(73) Proprietors:
• **Aleph**
  **73290 La Motte-Servolex (FR)**
• **Meareg UG**
  **86911 Dießen am Ammersee (DE)**

(72) Inventors:
• **Gaudaen, Jan**
  **73100 AIX LES BAINS (FR)**
• **Florent, Jean-Jacques**
  **74150 Thusy (FR)**

• **Lengewitz, Jens**
  **86911 Dießen am Ammersee (DE)**

(74) Representative: **IP Trust**
**2, rue de Clichy**
**75009 Paris (FR)**

(56) References cited:
**US-A1- 2009 310 981**

• JASIUNIENE ELENA ET AL: "Non-Destructive Evaluation of the Quality of Adhesive Joints Using Ultrasound, X-ray, and Feature-Based Data Fusion", APPLIED SCIENCES, vol. 12, no. 24, 1 December 2022 (2022-12-01), pages 12930, XP093072878, ISSN: 2076-3417, DOI: 10.3390/ app122412930

## Description

### FIELD OF THE INVENTION

The context of the invention is that of film manufacturing, and more specifically manufacturing of films having porosity, which requires the control of their characteristics during their formation.

### BACKGROUND OF THE INVENTION

Films under formation can present widths reaching ten meters or more, and are run continuously along a machine direction, requiring to be constantly monitored by non-contact measurement systems. Monitoring the characteristics of such films is performed by in-situ measurement devices comprising sensors mounted on mechanical frames capable of moving these sensors across the width of the running film being formed.

Some sensors perform absorption measurements of some sort of radiation sent through the product: an emitting head of the sensor sends a radiation towards the product while a detecting head performs a measurement of the radiation transmitted through the product. Both heads are moved together across the product so as to always face each other.

The radiation can be of various types, each corresponding to a given sensor type: ultrasonic waves as described in US 5,621,173 or US 4,446,735, beta radiation, X-rays as described in GB 1271438 or EP 1950527, or infrared radiation. The sensor type is selected depending on the material to be characterized and the specific needs of the practitioner. Characterizing a film that is homogeneous, i.e. made of unique, solid, phase, during its formation and adjusting fabrication parameters in response to a continuous characterization is a task that is routinely performed. One may refer for example to the patent document US 7,813 829 B2. However, characterizing a film having cavities is much more problematic because the cavities make interpretation of gathered data difficult. As a result, so far, only relatively complex and indirect characterization methods are known, such as the one described in WO 2021/063641 A1.

A non-destructive evaluation of adhesively bonded aerospace components, that involves the fusion of images obtained by ultrasound pulse echo and radiography techniques, is described in an article by Jasiuniene Elena et al., "Non-destructive Evaluation of the Quality of Adhesive Joints Using Ultrasound, X-ray, and Feature-based Delta Fusion", Applied Science, vol. 12, no. 24, 2022/12/01, page 12930.

### OBJECT OF THE INVENTION

In view of the issues mentioned above, the applicant considered a method combining measurement data of two types of sensors to characterize a film, allowing direct determination of porosity or density, and thereby thickness, of a film comprising cavities. This method is implementable by a measurement apparatus, in a manufacturing method and by a manufacturing line of a film.

### SUMMARY OF THE INVENTION

To this effect, a first aspect of the invention relates to a method of characterizing a film comprising the steps of characterizing the film so as to obtain a grammage of the film obtained by ultrasonic wave measurement and a grammage of the film obtained by X-ray measurement, determining at least one characteristic of the film chosen among a density, a porosity and a thickness, on the base of the grammage of the film obtained by ultrasonic wave measurement, the grammage of the film obtained by X-ray measurement, and at least one corresponding calibration curve establishing a correspondence between the at least one characteristic and the grammage of the film obtained by ultrasonic wave measurement and the grammage of the film obtained by X-ray measurement or a combination thereof, wherein the at least one corresponding calibration curve establishes a correspondence between the at least one characteristic and a ratio of the grammage of the film obtained by ultrasonic wave measurement and the grammage of the film obtained by X-ray measurement.

An advantage of this method lies in the possibility of directly measuring characteristics of a film, such as its porosity or its density, which is not possible to directly measuring by known conventional means. Such a method can be implemented in film manufacturing processes, measurement apparatuses or manufacturing lines of films, especially when this film has porosity, which usually makes it difficult to characterize.

According to further non limitative features of the first aspect of the invention, either taken alone or in any technically feasible combination:

- the at least one calibration curve can represent an association between ratios of the grammage of the film obtained by ultrasonic wave measurement and the grammage of the film obtained by X-ray measurement on one hand, and the at least one characteristic of the film on the other hand;

- the step of characterizing the film can further comprise a step of measuring a basis weight of an additive contained in the film, and the step of determining at least one characteristic of the film is also based on the measured basis weight of the additive;
- the additive can be a cavitating agent.

A second aspect of the invention relates to a measurement apparatus comprising a sensor, the sensor comprising an emitter head that comprises (i) an X-ray source ($S_{XR}$) and (ii) an ultrasonic wave source and a detector head that comprises (i) an X-ray sensor and (ii) an ultrasonic wave sensor, the measurement apparatus being configured so as to perform X-ray characterization and ultrasonic wave characterization of a film positioned between the emitter head and the detector head of the sensor, the measurement apparatus being configured to perform the method of characterizing a film according to the first aspect of the invention. The measurement apparatus can comprise a selective sensor system configured to measure a basis weight of an additive contained in the film, the measurement apparatus being further configured to perform the method of characterizing a film according the first aspect of the invention making use of the basis weight.

A third aspect of the invention relates to a method of manufacturing a film, comprising the steps of introducing a chemical compound into a preparation device, outputting the film from an outlet of the preparation device through a shaping device, characterizing the film according to the first aspect of the invention to determine the at least one characteristic of the film, comparing the at least one characteristic of the film to a target value for this characteristic, and generating and sending a feedback signal to at least one of the shaping device and the preparation device to adjust at least one fabrication parameter, based on the comparison. The step of characterizing the film can further comprise measuring a basis weight of an additive contained in the film, and the step of determining at least one characteristic of the film can also be based on the measured basis weight of the additive.

A fourth aspect of the invention relates to a manufacturing line for manufacturing a film, comprising a preparation device configured to prepare a mixture to form a film and having an outlet equipped with a shaping device configured to give a shape to the film, and the measurement apparatus according to the second aspect of the invention, configured to characterize the film shaped by the shaping device, the manufacturing line being configured to perform the method of manufacturing a film according to the third aspect of the invention. In the manufacturing line, the measurement apparatus according to the second aspect of the invention can further comprise a selective sensor system configured to measure a basis weight of an additive contained in the film, the measurement apparatus can be further configured to perform the method of characterizing a film according to according the first aspect of the invention making use of the basis weight, the manufacturing line can be configured to perform the method of manufacturing a film according to the third aspect of the invention making use of the measured basis weight of the additive.

## FIGURES

Many other features and advantages of the present invention will become apparent from reading the following detailed description, when considered in conjunction with the accompanying drawings, in which:

- Figure 1 illustrates a combined X-ray / ultrasonic wave measurement system ;
- Figure 2 illustrates a sensor of the system of Figure 1 ;
- Figure 3 illustrates a film manufacturing line including the combined X-ray / ultrasonic wave measurement system of Figure 1;
- Figure 4 illustrates a measurement method according to the invention ;
- Figure 5 illustrates a first calibration curve that can be used in the method illustrated by Figure 4 ;
- Figure 6 illustrates a second calibration curve that can be used in the method illustrated by Figure 4 ;
- Figure 7 illustrates a film manufacturing method according to the invention; and
- Figure 8 illustrates a film having porosity.

## DETAILED DESCRIPTION OF A SPECIFIC EMBODIMENT OF THE INVENTION

The reason why direct measurements are not employed in the characterization a film having porosity is that the cavities present in the film renders the conventional characterization methods inoperative.

In the case of X-rays characterization by absorption, the X-rays are attenuated as a function of the amount of matter they pass through, but independently of the distribution of this matter. For a film without cavities, a thickness profile (e.g. in m) can be derived directly from a basis weight profile deduced from the X-rays attenuation by dividing the basis weight values (e.g. in $g/m^2$) by the density of the film (e.g. in $g/m^3$), which is a known constant when the film is homogeneous and made of a known material. However, when cavities are present, the density of the film is unknown even though the material constituting the film may be known. The result is that the X-ray characterization of a porous film will give an information on a quantity of matter constituting the film and passed through by the X-rays, i.e. the basis weight or grammage of the film, but not on its thickness, density or porosity, which are parameters typically sought by the practitioner.

In the case of an ultrasonic wave characterization, a film to be characterized emits an ultrasonic wave in response to being excited by an incoming excitation ultrasonic wave. The presence of cavity interfaces within the film will randomly scatter the ultrasonic waves, the cavities having the effect of an artefact reducing the amplitude of the ultrasonic wave emitted by the film. The practical result is that a basis weight, deduced from attenuation of an ultrasonic wave passing through the film, will appear higher than it really is, and in an uncontrolled manner that depends on the characteristics of the cavities.

In the present example, we consider that the contribution of the cavities to the apparent grammage of a film in a grammage measurement by an ultrasonic wave measurement system is proportional to the grammage of the material forming the film. Although the invention is not limited to this specific model, it will be used to explain the approach leading to the method. The considerations above translate as the following equations Eq.1 and Eq.2:

$$\begin{cases} g_{RX}(film) = g = g_{Mat} & Eq.1 \\ g_{US}(film) = g_{Mat} + \alpha \times g_{Mat} & Eq.2 \end{cases}$$

where $g_{RX}(film)$ represents an X-ray absorption measurement of the real grammage $g$ of the film that is equivalent to the grammage $g_{Mat}$ of the material constituting the film. The X-ray absorption measurement $g_{RX}(film)$ is considered accurate, hence the equalities of equation 1. In equation *Eq.2*, $g_{US}(film)$ represents a measurement of the real grammage $g$ of the film by an ultrasonic wave measurement system but is inaccurate and thus different from $g$, $g_{Mat}$ represents the grammage of the material constituting the matter of the film, excluding the cavities, and $\alpha$ is a factor that, multiplied to $g_{Mat}$ represents the contribution of the cavities to the grammage of the film as perceived by the ultrasonic wave measurement system. In the absence of cavities in the film, the equation Eq. 3 would be true:

$$g_{US}(film) = g_{Mat} = g \quad Eq.3$$

Inserting Eq.1 into Eq.2 leads to equation Eq.4:

$$g_{US}(film) = g_{RX}(film) + \alpha \times g_{RX}(film) \quad Eq.4$$

and to equation Eq.5:0

$$\alpha = \frac{g_{US}(film)}{g_{RX}(film)} - 1 \quad Eq.5$$

We see that $\alpha$, that represents the contribution of the cavities to the ultrasonic wave measurement of a film, can be expressed as a function of a ratio between the ultrasonic wave measurement and an X-ray absorption measurement. Thus, upon proper calibration, it appears possible to express a porosity $\phi$ of a material, or the density $\rho$ of this material, directly via the combination of an X-ray characterization and an ultrasonic wave characterization of the film grammage.

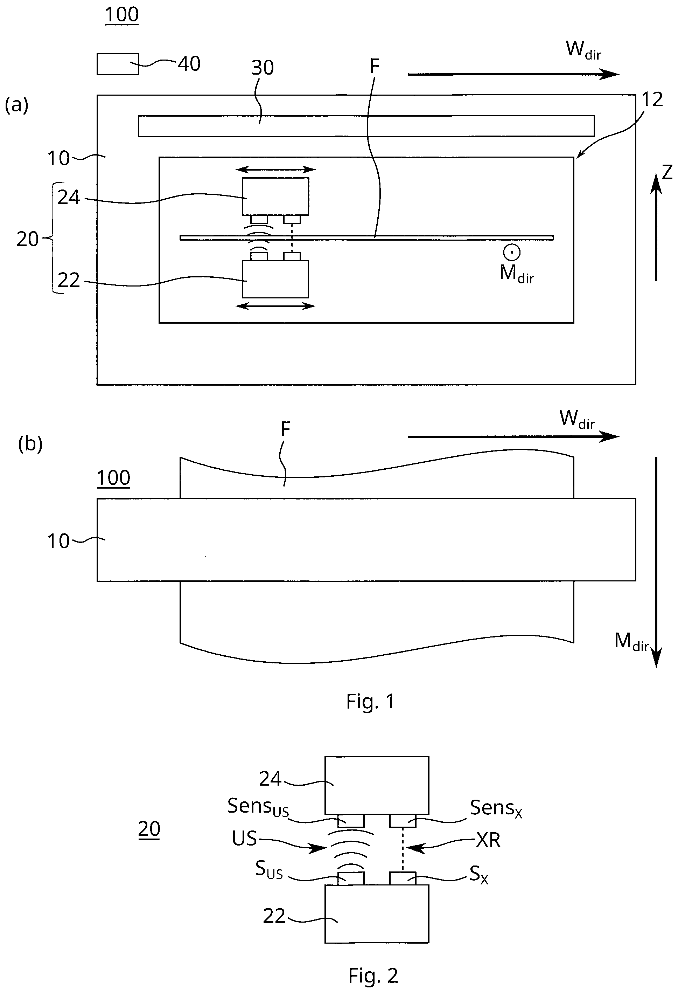

An implementation of this principle is detailed below, illustrated by figures 1 to 8. Such an implementation allows the direct characterization of the porosity and the density of a film having cavities. From these results, and since basis weight or grammage $g$ of the material is known from the X-ray measurements, it is also possible to deduce the thickness t of the film based on equation Eq. 6 below.

$$t = \frac{g}{\square} \quad Eq.6$$

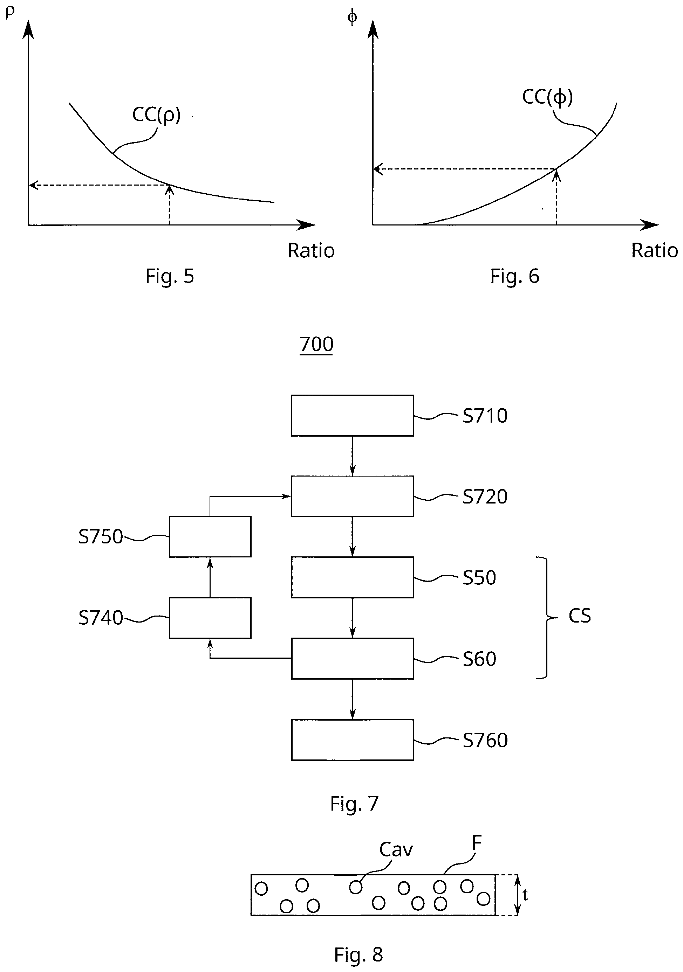

The implementation detailed below includes a measurement apparatus 100 configured to implement in a practical manner the principle outlined above, as well as a production line 300 including this apparatus to control the production of films, including films having porosity. Figure 8 illustrates such a film F of thickness t and comprising cavities Cav.

## Measurement apparatus

Figure 1 illustrates a measurement apparatus 100 in operation, comprising a frame 10 defining an aperture 12, the frame and the aperture extending along a width direction $W_{dir}$, a sensor 20 movable along the width direction $W_{dir}$ within the aperture 12, and a drive system 30 configured to move the sensor 20 along the width direction $W_{dir}$. The sensor 20 comprises an emitter head 22 and a detector head 24 facing the emitter head 22. In (a), the measurement apparatus 100 is represented in a front view, as seen in the machine direction $M_{dir}$, that is in the direction of circulation of a film F being fabricated. When traversing the aperture, the film is maintained in a horizontal plane, perpendicular to the vertical direction indicated as Z in the figure. In (b), the measurement apparatus 100 in represented in top view, as seen from above, only a small portion of the film F being represented. The measurement apparatus 100 is configured so as to characterize a film F under formation running horizontally in a machine direction $M_{dir}$ perpendicular to the width direction $W_{dir}$, through the aperture 12 and between the emitter head 22 and the detector head 24 of the sensor 20.

A control system 40 is functionally connected to the sensor 20 and to the drive system 30, and is configured to operate the sensor 20 and the drive system 30. The control system is equipped with a computer memory and an electronic computer configured to exploit numerical data obtained from the sensor. The control system is configured to scan a film F under formation over its width with the sensor 20 by moving the sensor along the width direction $W_{dir}$.

Figure 2 illustrates more specifically the sensor 20. The emitter head 22 comprises (i) an X-ray source $S_{XR}$ and (ii) an ultrasonic wave source $S_{US}$; conversely, the detector head 24 comprises (i) an X-ray sensor $Sens_{XR}$ and (ii) an ultrasonic wave sensor $Sens_{US}$.

The sensor 20 is configured so that, in operation, the X-ray source $S_{XR}$ emits X-rays XR towards the X-ray sensor $Sens_{XR}$ so that the X-ray sensor $Sens_{XR}$ detects the X-rays XR having gone through the film F to be characterized, and the ultrasonic wave source $S_{US}$ emits ultrasonic waves US towards the ultrasonic wave sensor $Sens_{US}$ so that the US sensor $Sens_{US}$ detects the ultrasonic waves having gone through the film F. Both characterization, X-ray and ultrasonic, are preferably performed simultaneously, but may be performed sequentially.

The control system 40 connected to the sensor 20 form both of an X-ray characterization system and an ultrasonic wave characterization system, or, otherwise stated, a combined X-ray and ultrasonic wave characterization system.

## Manufacturing line

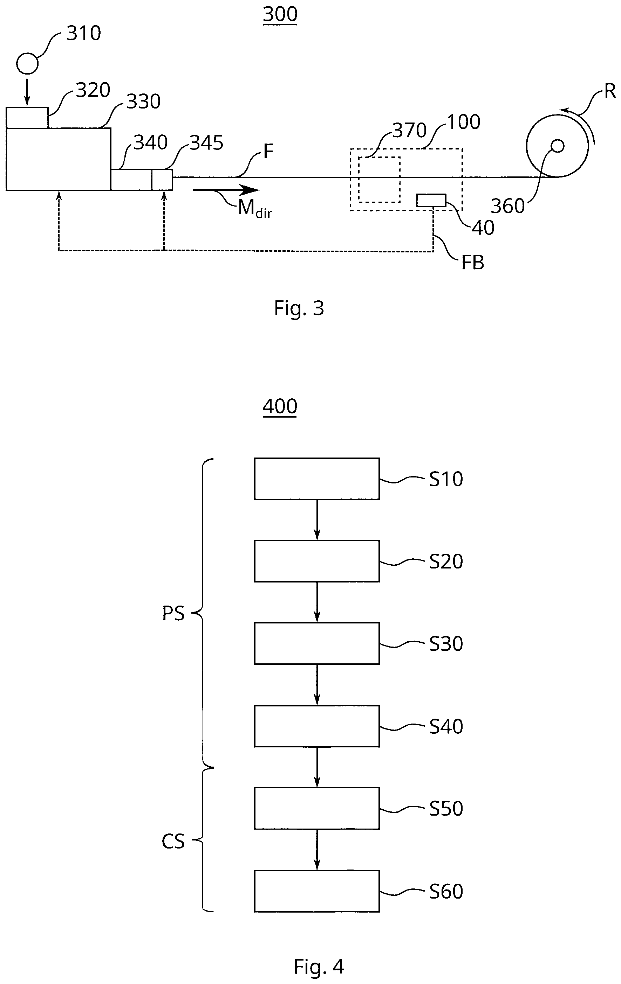

Figure 3 illustrates an example of a manufacturing line 300 for the film F formed from a polymer in this example, implementing a manufacturing process 700 according to the invention.

The manufacturing line 300 comprises a preparation device 330 comprising an inlet 320, through which chemical compounds forming a mixture 310 is introduced into the preparation device 330, and an outlet 340. The outlet 340 is equipped with a shaping device 345 configured to adjust a distance between two lips through which the film F is extruded. The mixture may comprise a polymer and additives intended to form a polymer film.

The preparation device 330 is intended to prepare the polymer 310 for shaping into a film, for example by bringing it to a suitable temperature by means of heaters and thermometers.

In this example, the inlet 320 may consist of a screw feeding the polymer in a molten state into the preparation device 330, and the outlet 340 may consist of a die through which the molten polymer is pushed and shaped into a film, according to conventional manufacturing processes.

At the die outlet, the resulting film is moved straight along the machine direction Mdir and then wound around a rotating roll 360 according to a rotation R of the rotating roll.

Between the outlet 340 of the preparation device and the roller 360, the film may undergo any conventional manufacturing steps, including, for example, calendering, heating, stretching, cutting, or drying steps.

In addition, the measurement apparatus 100 is configured so as to characterize the film F after it exits from the outlet 340 and on its way to the rotating roll 360.

The film F formed of the polymer comprises cavities because it has porosity, and its porosity, density or thickness could not be measured directly by conventional measurement apparatuses.

## Direct measurement of porosity or density

Figure 4 illustrates a measurement method 400 implementing the principle explained hereabove.

At a step S10, a set of calibration samples are provided to obtain a calibration curve.

These samples are made of a material having a known composition, such as a known polymer, each sample having specific, known, porosity and density, and having the shape of a film. The porosities are chosen to cover at least a range of interest regarding the porosity of films to be characterized. The number of sample may be determined by the practitioner according to a wished resolution or precision of the calibration curve.

For the sake of conciseness, we will consider in this example the case where the calibration samples are made from a same material as a film to be characterized.

For example, with the objective of characterizing a film made from polypropylene, a set of sample by be constituted by 20 polypropylene films having cavities respectively expressed as 100-n% where n is a multiple of 5 comprised between 1 and 20. Thus, this set of samples covers a porosity range of 0-95%.

At a step S20, each of the samples are characterized by the sensor 20 so as to obtain grammages $g_{US}(sample)$ obtained by ultrasonic wave measurement and grammages $g_{RX}(sample)$ obtained by X-ray measurement for each of the samples.

At a step S30, an association is established between the ratios $g_{US}(sample)/g_{RX}(sample)$ for each sample and the porosity or density of the corresponding sample. For example, data pertaining to a same sample are stored in a same line of a table recorded in the computer memory of the control system 40, as illustrated by Table 1 below, where an $n^{th}$ sample is identified by Sn, and associated porosity, density, grammage $g_{US}(sample)$, grammage $g_{RX}(sample)$ and ratio $g_{US}(sample)/g_{RX}(sample)$ by Pn, Dn, $g_{US}(n)$, $g_{RX}(n)$ and $g_{US}(n)/g_{RX}(n)$, respectively.

Table 1

| Sample | Porosity | Density | $g_{US}(sample)$ | $g_{RX}(sample)$ | Ratio |
|--------|----------|---------|------------------|------------------|-------|
| S1 | P1 | D1 | $g_{US}(1)$ | $g_{RX}(1)$ | $g_{US}(1)/g_{RX}(1)$ |
| S2 | P2 | D2 | $g_{US}(2)$ | $g_{RX}(2)$ | $g_{US}(2)/g_{RX}(2)$ |
| S3 | P3 | D3 | $g_{US}(3)$ | $g_{RX}(3)$ | $g_{US}(3)/g_{RX}(3)$ |
| S4 | P4 | D4 | $g_{US}(4)$ | $g_{RX}(4)$ | $g_{US}(4)/g_{RX}(4)$ |

At step S40, a calibration curve is defined from the data collected in Table 1 and stored in the computer memory in a conventional way, so as to establish a correspondence between a value of a given range of ratios $g_{US}(film)/g_{RX}(film)$ and an intensive characteristic of the film, either one of the porosity and the density. This is done for example by defining a curve fitting the experimental points plotted on a graph having the ratios on an x-axis and the chosen intensive characteristic on a y-axis.

In this document, a calibration curve is a generic term designing an association between experimental data and known characteristics. Here, it represents an association between ratios of a grammage of the film obtained by ultrasonic wave measurement and a grammage of the film obtained by X-ray measurement on one hand, and an intensive characteristic of the film, porosity $\phi$ or density $\rho$, on the other hand.

Figure 5 illustrates, in the form of a plot, a calibration curve CC(p) allowing to deduce a density $\rho$ of a film to be characterized from a ratio $g_{US}(film)/g_{RX}(film)$ of measured values $g_{US}(film)$ and $g_{RX}(film)$ of the film.

Similarly, Figure 6 illustrates, in the form of a plot, a calibration curve CC($\phi$) allowing to deduce a porosity $\phi$ of a film to be characterized from a ratio $g_{US}(film)/G_{RX}(film)$ of measured values $g_{US}(film)$ and $g_{RX}(film)$ of the film.

At a step S50, the film to be characterized is characterized by the sensor 20 so as to obtain grammages of the film $g_{US}(film)$ and $g_{RX}(film)$ obtained respectively by ultrasonic wave measurement and X-ray measurement and store these measurement data of the film in the computer memory.

At a step S60, the control system 40 determines at least one intensive characteristic of the film, i.e. a density, a porosity or both of the film based on the measurement data of the film, grammages $g_{US}(film)$ and $g_{RX}(film)$, and the corresponding calibration curves stored in the computer memory, and store this density or this porosity in the computer memory. In addition, thickness $t$ of the film as an extensive characteristic can be deduced from the grammage of the film $g_{RX}(film)$ obtained by X-ray measurement and the density $\rho$ of the film by application of equation Eq. 6.

Steps S10 to S40 constitutes collectively a preparation step PS for the characterization steps S50 and S60 of a film to be characterized. Once this preparation step has been performed once, the calibrations curves are stored in the computer memory of the control system 40. Thus, the preparation step SP does not have to be performed again, and a characterization step CS comprising the steps S50 and S60 can be repeated independently of the preparation step SP, with a sub-step of making use of the calibration curves stored in the computer memory.

In this example, a set of polypropylene samples are employed to define calibration curves used in the characterization of a polypropylene film. It is naturally possible to characterized films made of other materials than polypropylene from the same calibration curves, by introducing a correcting factor defined by a ratio of the density of the other material over the density of polypropylene. More generally, any material can be employed to form the set of calibration samples and a film formed from any material can be characterized, as long as the density ratio between these two materials is known.

In addition, the presence of an additive added to a base material of the film may be measured and taken into account as it impacts the basis weight of the film itself, and thus the determination of the density, the porosity and the thickness. For example, in the case of a film comprising a known cavitating agent (i.e. a chemical compound of known density) used to create cavities, the proportion of cavitating agent in the film may be measured by a specific sensor and introduced in the calculation of the density and the porosity of the film by calculating a corrected density of the material (base material + cavitating agent) forming the film. The cavitating agent can be of an inorganic type, e.g. calcium carbonate particles, or of an organic type, e.g. polybutylene terephthalate (PBT), which are immiscible in the film base polymer, e.g. polypropylene.

Thus, the step S50 may comprise a measurement of the distribution of the additive in the film by means of selective sensor system 370, such as a scanner configured to characterize the film F of Figure 3, comprising a sensor capable of measuring, specifically, the basis weight of the additive contained in the film. Such an sensor can, for example, be based on the absorption of infrared radiation by the additive. Further, in the step S60, the determination of the density, the porosity, the thickness of the film is based on the measured basis weight of the additive in addition to the measurement data of the film, grammages $g_{US}$(film) and $g_{RX}$(film), and the corresponding calibration curves.

Figure 3 illustrates a situation where the selective sensor system is integrated in the measurement apparatus 100, and controlled by the control system 40. Alternatively, the selective sensor system 370 may be independent of the measurement apparatus 100.

The explanation above applied specifically to a model in which the contribution of the cavities to the apparent grammage of a film in a grammage measurement by an ultrasonic wave measurement system is proportional to the grammage of the material forming the film, and physical quantities of interest are expressed as functions of the ratio $g_{US}$(film)/$g_{RX}$(film). A more general approach would be to consider $g_{US}$(film) and $g_{RX}$(film) as independent variables and by determining bidimensional calibration curves establishing associations between an intensive characteristic of a film, porosity $\phi$ or density $\rho$ and both of a grammage of the film obtained by ultrasonic wave measurement and a grammage of the film obtained by X-ray measurement, by conventional interpolation or regression.

**Manufacturing method**

A manufacturing method according to the invention is illustrated by Figure 7 and includes a step S710 of introducing a chemical compound into the preparation device 330 via the inlet 320, a step S720 of outputting from the outlet 340 and shaping the chemical compound into the film F by the shaping device 345, and a step S730 of winding the sheet or film onto the rotating roll 360.

Between the steps S720 and S760 are interposed the steps S50 and S60 of the characterization step CS that allows to characterize the film between the shaping device 345 and the roll 360. From step S60, at least one measured characteristic (porosity, density, thickness) of the film is compared to a target value of this characteristic, by means of the control system 40, at a step S740.

At step S750, based on the comparison of step S740, a feedback signal FB is generated and sent to the shaping device 345 and/or to the preparation device (330) to adjust at least one fabrication parameter, such as a distance between two lips through which the film F of polymer is extruded, a temperature, or the proportion of an additive added to the polymer forming the film. More generally, the feedback signal can be employed as the practitioner sees it fit so as to adjust any parameter influencing the porosity, the density or the thickness of the film. By proceeding in this way, the step S720 is adjusted in response the characterization step CS, which forms a feedback loop.

Other variations to the disclosed example can be understood and effected by those skilled in the art in practicing the claimed invention, from a study of the drawings, the disclosure, and the appended claims.

**Claims**

1.　Method (400) of characterizing a film (F) comprising the steps of:

- characterizing (S50) the film (F) so as to obtain a grammage of the film obtained by ultrasonic wave measurement and a grammage of the film obtained by X-ray measurement;
- determining (S60) at least one characteristic ($\rho$, $\phi$, t) of the film chosen among a density ($\rho$), a porosity ($\phi$) and a thickness (t), on the base of the grammage of the film obtained by ultrasonic wave measurement, the grammage of the film obtained by X-ray measurement, and at least one corresponding calibration curve (CC($\rho$), CC($\phi$)) establishing a correspondence between the at least one characteristic ($\rho$, $\phi$, t) and the grammage of the film obtained by ultrasonic wave measurement and the grammage of the film obtained by X-ray measurement or a combination thereof,

wherein the at least one corresponding calibration curve (CC($\rho$), CC($\phi$)) establishes a correspondence between the at least one characteristic ($\rho$, $\phi$, t) and a ratio of the grammage of the film obtained by ultrasonic wave measurement and the grammage of the film obtained by X-ray measurement.

2. The method according to claim 1, wherein the at least one calibration curve represents an association between ratios of the grammage of the film obtained by ultrasonic wave measurement and the grammage of the film obtained by X-ray measurement on one hand, and the at least one characteristic of the film on the other hand.

3. The method according to claim 1 or 2,

wherein the step of characterizing (S50) the film further comprises measuring a basis weight of an additive contained in the film (F), and
wherein the step of determining at least one characteristic ($\rho$, $\phi$, t) of the film is also based on the measured basis weight of the additive.

4. The method according to claim 3, wherein the additive is a cavitating agent.

5. A measurement apparatus (100) comprising a sensor (20), the sensor (20) comprising an emitter head (22) that comprises (i) an X-ray source ($S_{XR}$) and (ii) an ultrasonic wave source ($S_{US}$) and a detector head (24) that comprises (i) an X-ray sensor ($Sens_{XR}$) and (ii) an ultrasonic wave sensor ($Sens_{US}$), the measurement apparatus being configured so as to perform X-ray characterization and ultrasonic wave characterization of a film (F) positioned between the emitter head (22) and the detector head (24) of the sensor (20),
the measurement apparatus being configured to perform the method (400) of characterizing a film (F) according to claim 1 or 2.

6. The measurement apparatus according to claim 5, further comprising a selective sensor system (370) configured to measure a basis weight of an additive contained in the film, the measurement apparatus being further configured to perform the method (400) of characterizing a film (F) according to claim 3 or 4.

7. Method (700) of manufacturing a film (F), comprising the steps of:

- introducing (S710) a chemical compound (310) into a preparation device (330);
- outputting (S720) the film (F) from an outlet (340) of the preparation device (330) through a shaping device (345);
- characterizing (CS, S50, S60) the film (F) according to any one of the methods of claim 1 or 2 to determine the at least one characteristic of the film;
- comparing (S740) the at least one characteristic of the film to a target value for this characteristic; and
- generating and sending (S750) a feedback signal (FB) to at least one of the shaping device (345) and the preparation device (330) to adjust at least one fabrication parameter, based on the comparison.

8. The method according to claim 7,

wherein the step of characterizing (S50) the film further comprises measuring a basis weight of an additive contained in the film, and
wherein the step of determining (S60) at least one characteristic ($\rho$, $\phi$, t) of the film is also based on the measured basis weight of the additive.

9. Manufacturing line (300) for manufacturing a film (F), comprising:

- a preparation device (330) configured to prepare a mixture (310) to form a film (F) and having an outlet (340) equipped with a shaping device (345) configured to give a shape to the film (F); and
- the measurement apparatus (100) according to claim 5, configured to characterize the film shaped by the shaping device (345),

the manufacturing line being configured to perform the method (700) of manufacturing a film (F) according to claim 7.

10. Manufacturing line according to claim 9,
wherein the measurement apparatus (100) according to claim 5 further comprises a selective sensor system (370) configured to measure a basis weight of an additive contained in the film, the measurement apparatus being further configured to perform the method (400) of characterizing a film (F) according to claim 3 or 4, the manufacturing line being configured to perform the method (700) of manufacturing a film (F) according to claim 8.

**Patentansprüche**

1. Verfahren (400) zum Charakterisieren einer Folie (F), umfassend die Schritte:

   - Charakterisieren (S50) der Folie (F), um eine Grammatur der Folie zu erhalten, die durch Ultraschallwellenmessung ermittelt wurde, und eine Grammatur der Folie, die durch Röntgenmessung ermittelt wurde,
   - Bestimmen (S60) mindestens einer Eigenschaft ($\rho$, $\phi$, t) der Folie, ausgewählt aus einer Dichte (p), eine Porosität ($\phi$) und einer Dicke (t), basierend auf der Grammatur der Folie, die durch Ultraschallmessung ermittelt wurde, der Grammatur der Folie, die durch Röntgenmessung ermittelt wurde, und mindestens einer entsprech- enden Kalibrierungskurve (CC($\rho$), CC ($\phi$)), die eine Entsprechung zwischen der mindestens einen Eigenschaft ($\rho$, $\phi$, t) und der Grammatur der Folie, die durch Ultraschallwellenmessung ermittelt wurde, und der Grammatur der Folie, die durch Röntgenmessung ermittelt wurde, oder einer Kombination davon, herstellt

   wobei die mindestens eine entsprechende Kalibrierungskurve (CC(p), CC ($\phi$)) eine Entsprechung zwischen der mindestens einen Eigenschaft ($\rho$, $\phi$, t) und einem Verhältnis der Grammatur der Folie, die durch Ultraschallwellenmessung erhalten wurde, und der Grammatur der Folie, die durch Röntgenmessung erhalten wurde, herstellt.

2. Verfahren nach Anspruch 1, wobei die mindestens eine Kalibrierungskurve eine Verbindung zwischen Verhältnissen der Grammatur der Folie, die durch Ultraschallwellenmessung erhalten wurde, und der Grammatur der Folie, die durch Röntgenmessung erhalten wurde, einerseits und der mindestens einen Eigenschaft der Folie andererseits darstellt.

3. Verfahren nach Anspruch 1 oder 2,

   wobei der Schritt des Charakterisierens (S50) der Folie ferner das Messen eines Flächengewichts eines in der Folie (F) enthaltenen Additivs umfasst, und
   wobei der Schritt des Bestimmens mindestens einer Eigenschaft ($\rho$, $\phi$,t) der Folie auch auf dem gemessenen Flächengewicht des Additivs basiert.

4. Verfahren nach Anspruch 3, wobei der Zusatzstoff ein Kavitationsmittel ist.

5. Messeinrichtung (100) umfassend einen Sensor (20), wobei der Sensor (20) einen Emitterkopf (22) umfasst, der (i) eine Röntgenquelle ($S_{XR}$) und (ii) eine Ultraschallwellenquelle (Sus) und einen Detektorkopf (24), der (i) einen Röntgensensor ($Sens_{XR}$) und (ii) einen Ultraschallwellensensor (Sensus) umfasst, umfasst, wobei die Messvorrichtung so konfiguriert ist, dass sie eine Röntgenstrahlcharakterisierung und eine Ultraschallwellencharakterisierung eines Films (F) durchführt, der zwischen dem Emitterkopf (22) und dem Detektorkopf (24) des Sensors (20) positioniert ist,
   wobei die Messvorrichtung dazu konfiguriert ist, das Verfahren (400) zum Charakterisieren eines Films (F) gemäß Anspruch 1 oder 2 durchzuführen.

6. Messeinrichtung nach Anspruch 5, die ferner ein selektives Sensorsystem (370) umfasst, das so konfiguriert ist, dass es das Flächengewicht eines in dem Film enthaltenen Additivs misst, wobei die Messeinrichtung ferner so konfiguriert ist, dass sie das Verfahren (400) zum Charakterisieren eines Films (F) gemäß Anspruch 3 oder 4 durchführt.

7. Verfahren (700) zum Herstellen einer Folie (F), umfassend die Schritte:

   - Einbringen (S710) einer chemischen Verbindung (310) in eine Aufbereitungsvorrichtung (330);
   - Ausgeben (S720) der Folie (F) aus einem Auslass (340) der Aufbereitungsvorrichtung (330) durch eine Formvorrichtung (345);
   - Charakterisieren (CS, S50, S60) der Folie (F) gemäß einem der Verfahren nach Anspruch 1 oder 2, um die mindestens eine Eigenschaft der Folie zu bestimmen;
   - Vergleichen (S740) der mindestens einen Eigenschaft der Folie mit einem Zielwert für diese Eigenschaft; und
   - Erzeugen und Senden (S750) eines Rückkopplungssignals (FB) an mindestens eine von der Formvorrichtung (345) und der Aufbereitungsvorrichtung (330), um basierend auf dem Vergleich mindestens einen Herstellungsparameter anzupassen.

8. Verfahren nach Anspruch 7,

wobei der Schritt des Charakterisierens (S50) der Folie ferner das Messen eines Flächengewichts eines in der Folie enthaltenen Additivs umfasst, und

wobei der Schritt des Bestimmens (S60) mindestens einer Eigenschaft ($\rho$, $\phi$, t) der Folie auch auf dem gemessenen Flächengewicht des Additivs basiert.

9. Fertigungslinie (300) zum Herstellen einer Folie (F), umfassend:

- eine Aufbereitungsvorrichtung (330), die dazu konfiguriert ist, eine Mischung (310) zur Bildung eines Films (F) aufzubereiten, und die einen Auslass (340) aufweist, der mit einer Formvorrichtung (345) ausgestattet ist, die dazu konfiguriert ist, dem Film (F) eine Form zu geben; und
- die Messeinrichtung (100) nach Anspruch 5, die dazu konfiguriert ist, den durch die Formvorrichtung (345) geformten Film zu charakterisieren,

wobei die Fertigungslinie dazu konfiguriert ist, das Verfahren (700) zur Herstellung einer Folie (F) gemäß Anspruch 7 durchzuführen.

10. Fertigungslinie nach Anspruch 9,
wobei die Messeinrichtung (100) nach Anspruch 5 ferner ein selektives Sensorsystem (370) umfasst, das so konfiguriert ist, dass es das Flächengewicht eines in dem Film enthaltenen Additivs misst, wobei die Messeinrichtung ferner so konfiguriert ist, dass sie das Verfahren (400) zum Charakterisieren eines Films (F) gemäß Anspruch 3 oder 4 durchführt, wobei die Fertigungslinie zum Durchführen des Verfahrens (700) zum Herstellen einer Folie (F) gemäß Anspruch 8 konfiguriert ist.

## Revendications

1. Procédé (400) de caractérisation d'un film (F) comprenant les étapes consistant à :

- caractériser (S50) le film (F) de manière à obtenir un grammage du film obtenu par mesure par ondes ultrasonores et un grammage du film obtenu par mesure par rayons X ;
- déterminer (S60) au moins une caractéristique ($\rho$, $\phi$, t) du film choisie parmi une densité ($\rho$), une porosité ($\phi$) et une épaisseur (t), en fonction du grammage du film obtenu par mesure par ondes ultrasonores, du grammage du film obtenu par mesure par rayons X, et d'au moins une courbe d'étalonnage correspondante (CC($\rho$), CC($\phi$)) établissant une correspondance entre l'au moins une caractéristique ($\rho$, $\phi$, t) et le grammage du film obtenu par mesure par ondes ultrasonores et le grammage du film obtenu par mesure par rayons X ou une combinaison de ceux-ci,

dans lequel l'au moins une courbe d'étalonnage correspondante (CC($\rho$), CC($\phi$)) établit une correspondance entre l'au moins une caractéristique ($\rho$, $\phi$, t) et un rapport entre le grammage du film obtenu par mesure par ondes ultrasonores et le grammage du film obtenu par mesure par rayons X.

2. Procédé selon la revendication 1, dans lequel l'au moins une courbe d'étalonnage représente une association entre des rapports entre le grammage du film obtenu par mesure par ondes ultrasonores et le grammage du film obtenu par mesure par rayons X d'une part, et l'au moins une caractéristique du film d'autre part.

3. Procédé selon les revendications 1 ou 2,

dans lequel l'étape de caractérisation (S50) du film comprend en outre la mesure d'un poids de base d'un additif contenu dans le film (F), et
dans lequel l'étape de détermination d'au moins une caractéristique ($\rho$, $\phi$, t) du film est également en fonction du poids de base mesuré de l'additif.

4. Procédé selon la revendication 3, dans lequel l'additif est un agent de cavitation.

5. Appareil de mesure (100) comprenant un capteur (20), le capteur (20) comprenant une tête émettrice (22) qui comprend (i) une source de rayons X ($S_{XR}$) et (ii) une source d'ondes ultrasonores (Sus) et une tête détectrice (24) qui comprend (i) un capteur de rayons X ($Sens_{XR}$) et (ii) un capteur d'ondes ultrasonores (Sensus), l'appareil de mesure étant conçu de manière à réaliser une caractérisation par rayons X et une caractérisation par ondes ultrasonores d'un film (F) positionné entre la tête émettrice (22) et la tête détectrice (24) du capteur (20),
l'appareil de mesure étant conçu pour réaliser le procédé (400) de caractérisation d'un film (F) selon la revendication 1 ou 2.

6. Appareil de mesure selon la revendication 5, comprenant en outre un système de capteurs sélectifs (370) conçu pour mesurer un poids de base d'un additif contenu dans le film, l'appareil de mesure étant en outre conçu pour réaliser le procédé (400) de caractérisation d'un film (F) selon la revendication 3 ou 4.

7. Procédé (700) de fabrication d'un film (F), comprenant les étapes consistant à :

- introduire (S710) un composé chimique (310) dans un dispositif de préparation (330) ;
- sortir (S720) le film (F) d'une sortie (340) du dispositif de préparation (330) à travers un dispositif de mise en forme (345) ;
- caractériser (CS, S50, S60) le film (F) selon l'un quelconque des procédés selon la revendication 1 ou 2 pour déterminer l'au moins une caractéristique du film ;
- comparer (S740) l'au moins une caractéristique du film à une valeur cible pour cette caractéristique ; et
- générer et envoyer (S750) un signal de retour (FB) à au moins l'un du dispositif de mise en forme (345) et du dispositif de préparation (330) pour ajuster au moins un paramètre de fabrication, en fonction de la comparaison.

8. Procédé selon la revendication 7,

dans lequel l'étape de caractérisation (S50) du film comprend en outre la mesure d'un poids de base d'un additif contenu dans le film, et
dans lequel l'étape de détermination (S60) d'au moins une caractéristique (p, $\phi$, t) du film est également en fonction du poids de base mesuré de l'additif.

9. Ligne de fabrication (300) pour la fabrication d'un film (F), comprenant :

- un dispositif de préparation (330) conçu pour préparer un mélange (310) pour former un film (F) et ayant une sortie (340) équipée d'un dispositif de mise en forme (345) conçu pour donner une forme au film (F) ; et
- l'appareil de mesure (100) selon la revendication 5, conçu pour caractériser le film mis en forme par le dispositif de mise en forme (345),

la ligne de fabrication étant conçue pour réaliser le procédé (700) de fabrication d'un film (F) selon la revendication 7.

10. Ligne de fabrication selon la revendication 9,
dans laquelle l'appareil de mesure (100) selon la revendication 5 comprend en outre un système de capteurs sélectifs (370) conçu pour mesurer un poids de base d'un additif contenu dans le film, l'appareil de mesure étant en outre conçu pour réaliser le procédé (400) de caractérisation d'un film (F) selon la revendication 3 ou 4, la ligne de fabrication étant conçue pour réaliser le procédé (700) de fabrication d'un film (F) selon la revendication 8.

Fig. 1

Fig. 2

## 300

Fig. 3

## 400

Fig. 4

Fig. 5

Fig. 6

700

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5621173 A
- US 4446735 A
- GB 1271438 A
- EP 1950527 A
- US 7813829 B2
- WO 2021063641 A1

**Non-patent literature cited in the description**

- **JASIUNIENE ELENA et al.** Non-destructive Evaluation of the Quality of Adhesive Joints Using Ultrasound, X-ray, and Feature-based Delta Fusion. *Applied Science*, 01 December 2022, vol. 12 (24), 12930